# EUROPEAN PATENT APPLICATION

(11) **EP 1 933 319 A1**
(43) Date of publication of application: **18.06.2008**
(21) Application number: 06301240.5
(22) Date of filing: 12.12.2006
(51) Int. Cl.: G11B 20/10

(54) **Method for recording on recording media**

(71) Applicant: Thomson Licensing, 92100 Boulogne-Billancourt (FR)
(72) Inventor: KWOK, Kwong Heng, 730357, Singapore (SG); TAO, Cheng, 530165, Singapore (SG)
(74) Representative: Thies, Stephan

(57) **Abstract**

The invention relates to a method for recording on recording media (14) with different recording layers (16,18). The method has the steps of
- compressing data (AV) to be recorded,
- buffering the compressed data (CD,CDH,CDS), and
- recording the buffered data (RD) on a first recording layer (16,18)
- checking the distance (D) to a switching operation from said first recording layer (16,18) to a second recording layer (18,16),
- when the distance (D) is below a predetermined value (DP) changing the ratio (R) of compressed data (CD) to be buffered per unit time to buffered data (CD) to be recorded per unit time to a low value,
- when the distance (D) is zero or close to zero performing the switching operation from first layer (16,18) to second layer (18,16), and
- when the switching operation is completed changing said ratio (R) back to its original value.

## Description

The invention refers to a method for recording on recording media with different recording layers and a corresponding device.

From WO 2006/018810 A1 a method of controlling the writing power of a laser beam and an optical recorder for recording on different layers of a recording medium is known. It describes a so-called walking optimum power control for improving the accuracy of the laser power.

It is an object of the invention to improve recording on recording media with different recording layers.

In a method according to the invention data to be recorded is compressed, the compressed data is buffered and the buffered data is recorded on a first recording layer. In case that the distance to a switching operation to another recording layer is below a predetermined value, the ratio of compressed data to recorded data per time unit is changed and only set back to its previous value after the switching operation has been completed. The ratio of number of compressed data units to be buffered per time unit compared to the number of data units to be taken out of the buffer is thus checked and reduced shortly before and during the switching operation. That means the number of buffered data units at the beginning of the switching operation is very low or at the minimum allowable value. This has the advantage that no data to be recorded is lost even if the switching operation takes a long time even without increasing available buffer memory. The switching operation from one layer to another layer is deemed to be completed after recording on the second layer is fully operational. This means that for example track following on an optical disk is in its normal status, the buffer fill level of the recording buffer is below a certain upper threshold or at a medium value and other servo control circuits e.g. for focusing on the second layer, are in stable status. The distance to a switching operation from first to second recording layer may be determined by a certain time ahead of such switching, a certain number of data units to be recorded before such switching operation, it may be depending on a position indication on the recording layer or on another suitable condition. The invention deals with recording media such as dual or multi layer optical disks, double-sided optical disks and any other recording media that require switching time between recording on different recording layers.

According to the invention during switching from one layer to another layer an initialization step is performed before recording on the other recording layer starts. This has the advantage that the recording on the other layer is performed under optimized conditions from the beginning.

Preferably, the initialization step is one of power calibration, recording layer status detection or copy protection checking. In case of optical recording the power of the laser is to be adapted to the recording medium. In case of a dual or multilayer optical recording medium the properties of each layer are different and also there is a difference between optimum power depending on working time of the device, for example due to heating up of the laser source, heating up of the recording medium etc. It is thus advantageous to perform power calibration when switching to another recording layer. Power calibration may also be required or desirable during recording on the same layer, so-called walking power calibration. This is usually not very time consuming but the inventive idea of changing the ratio is also advantageously applied in this case. The detection of recording layer status is directed to which type of layer it is switched to. The type may be recording layer or read-only layer, the type may be a certain material with certain properties to be taken into account, the type may indicate conformity to a different type of recording standard than the previous layer etc. Copy protection checking is directed to the question whether the recording on the new layer is permitted, whether a certain type of copy protection is required for this layer, or the necessity to perform certain copy protection measures before recording on the new layer is permitted.

Advantageously the ratio change is performed by changing the rate of compression of the data to be recorded. This has the advantage that the buffering process before recording does not need to be changed and that care can be taken to make a change that is detectable by a user as unrecognizable as possible.

In case that the data to be recorded is one of audio and video, the rate of compression is advantageously changed by changing the resolution. For video data, for example the temporal resolution or the spatial resolution is changed. Changing the temporal resolution is, for example, done by repeating every odd picture and drop every even picture, or doing the same for every third, fourth etc. picture. The respective information in the compressed data stream is much less than for a complete even, third, fourth etc. picture. The spatial resolution may be reduced by, for example, taking every second pixel of a line or by taking the full number of pixels in the center of the picture, but a reduced number of pixels in the outer areas. The latter has the advantage of not having a recognizable effect in an area where the user is most attracted to.

In case of audio data the temporal resolution may be reduced by taking larger time slices for transformation from time domain to frequency domain, by taking fewer samples per time unit, or another temporal measure. The spectral resolution is advantageously reduced by taking fewer samples in the frequency domain, by reducing the accuracy of samples taken in the frequency domain or by other appropriate measures in the frequency domain.

Another inventive way to change the ratio is to disregard a high resolution part of the compressed data. This is especially advantageous in case of the use of scalable video or audio. In this case a low resolution compressed data stream and a high resolution compressed data stream exist. The ratio is e.g. changed by partly or completely not buffering the high resolution compressed data, or by overwriting high resolution compressed data in the buffer that was not yet recorded with newly compressed data. Also any other suitable way of disregarding the high resolution part is possible.

Another inventive possibility to change the ratio is temporarily increasing the writing data rate before the switching happens until the switching is completed. Usually the write data rate depends, amongst other circumstances, on the rotational speed of the recording medium. In order to save power, to reduce noise, or to reduce wear, usually the speed to record is chosen lower than the maximum possible speed. According to the invention the recording speed is increased to maximum or at least to a higher value than usually, so that the buffer fill level reaches an acceptable minimum. Then the time consuming switching operation is performed. During the switching operation there is a certain time where no recording is possible. Thus the ratio is very high during switching operation and the buffer filling level increases. After the switching the recording starts again at high speed and the buffer fill level is reduced again. The recording speed is reduced, which means a low ratio is reached, after the buffer fill level has reached a certain acceptable or medium level.

A device according to the invention is adapted to perform the method as described above.

The invention is described below in an exemplary way. The described embodiment is only one possibility to implement the invention, deviations from the described embodiment falling under the wording of the claims are within the scope of the invention. In the figures:
- Fig. 1: shows a device that is adapted to perform recording according to the invention
- Fig. 2: shows an exemplary flowchart of the method according to the invention

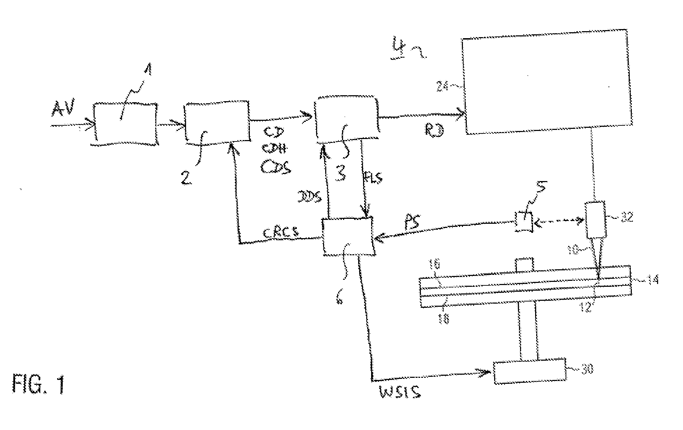

Fig. 1 shows a device that is adapted to perform recording according to the invention. It is provided with a buffer 1 for buffering an uncompressed audio/video data stream AV and for providing the uncompressed data to an MPEG encoder 2. The output of the MPEG encoder 2 is connected to a write buffer 3 for buffering the compressed data CD. The compressed data CD consists in one embodiment of a high resolution part CDH and a standard resolution part CDS.

The data to be recorded RD is provided to an optical recording unit 4, especially to a controller 24 of the recording unit 4. An optical record carrier 14 is driven by a motor 30. The optical record carrier 14 comprises a first optical storage layer 16 and a second optical storage layer 18. From a laser source 32 a laser beam 10, 12 can be focused on either the first optical storage layer 16 or the second optical storage layer 18. The power of the laser source 32 is controlled by a controller 24. The controller 24 also performs necessary conversion of the data format for recording, e.g. for error correction purposes.

A position detector 5 detects the radial position of the laser beam 10,12 with regard to the optical record carrier 14. The detected position signal PS is provided to a controller 6. The controller 6 also receives a fill level signal FLS from the write buffer 3. The controller 6 makes use of one or both of these input signals to detect whether the distance to the layer switching procedure is below a certain threshold. In this case one or several of the following actions are done: A compression rate change signal CRCS is provided to the MPEG encoder 2. A data disregard signal DDS is provided to write buffer 3. A write speed increase signal WSIS is provided to motor 30.

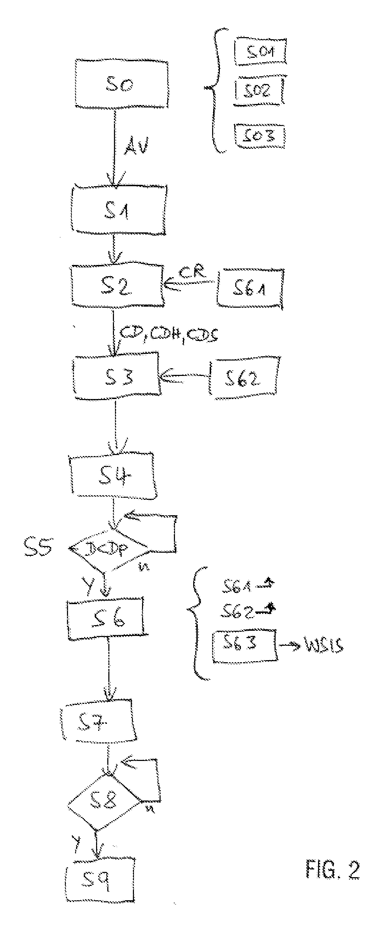

Fig. 2 shows an exemplary flowchart of a method for recording on recording media 14 with different recording layers 16,18.

In step S0 an initialization step is performed before starting recording on a recording layer 16,18. This initialization consists of one or more of power calibration step S01, recording layer status detection step S02, and copy protection checking step S03.

In step S1 uncompressed data AV to be recorded are received. In step S2 the uncompressed data AV are compressed. The compressed data CD to be recorded are buffered in step S3 in a write buffer 3. From the write buffer 3 compressed data CD are taken in step S4 to be recorded on an optical record carrier 14. Recording takes place at a first of the recording layers 16,18.

During recording it is checked in step S5 whether the distance D to a switching operation from said first recording layer 16,18 to a second recording layer 18,16 is below a predetermined value DP. For example a position signal PS is used therefore. If the checking result is negative recording commences and step S5 is performed repeatedly. If the checking result is positive then the ratio R of compressed data CD to be buffered per time to buffered data RD to be recorded per time is changed to a low value in step S6.

When the distance D is zero or close to zero a switching operation from first layer 16,18 to second layer 18,16 is performed in step S7. Similar initialization steps as described above to steps S01 to S03 are performed here, too. In step S8 it is checked whether the switching operation is completed. If this is the case then the ratio R is set back to its original value in step S9, else it is kept and step S8 is performed repeatedly.

The changing of the ratio R of step S6 is performed in one or several sub steps. These may happen alternatively, partly or completely cumulatively.

In step S61 the compression rate CR applied in step S6 to compress the data to be recorded is changed to a low value. Preferably the rate of compression CR is changed by reducing the resolution of audio and/or video data to be recorded.

In step S62 alternatively or in addition the ratio R is reduced by disregarding a high resolution part CDH of the compressed data while a standard resolution part CDS of the compressed data is kept. This is either reached by refraining from buffering the high resolution part CDH or by allowing the oldest high resolution part CDH data to be overwritten with more recent data CDH,CDS.

In step S63 alternatively or in addition the ratio R is reduced by temporarily increasing the writing data rate or writing speed. A write speed increase signal WSIS is used therefore. The motor 30 rotates faster and the laser source 32 is modulated faster then. The writing speed is reduced with step S9.

In other words, in one embodiment the invention deals with dual-layer recording on optical disks 14. There occurs the problem that at transition from first to second layer a new OPC has to be performed. OPC is optimum power calibration. As the disk heats up during recording, it is necessary to perform a new power calibration when switching from one layer to another, i.e. it is not possible to do the power calibration for both layers in advance of the complete recording process. OPC takes about twenty seconds, so seamless real time recording cannot be done, except a very large buffer is provided. It is desired to reduce the buffer size required for real time recording. One possibility would be to find a way to reduce the time needed for OPC. But even with reduced OPC time, further improvements might be desired. An idea of the invention is to lower the encoding bit rate shortly before the transition is to be done. By this a bigger time can be bridged than without, so less RAM is needed. Another idea is to repeat a certain amount of frames when encoding. In this way, too, a lower bit rate is achieved. When playing back just some frames are repeated. Repeating every third frame would reduce the required RAM by about one third. As the point in time at which the transition happens is predictable, reducing bit rate would be started sufficiently ahead of the transition. Until then and during OPC the buffer is filled with this reduced rate, and after OPC recording with normal speed continues. At or shortly after start of recording on the second layer the normal bit rate will be used for filling the buffer. Real time recording is thus made possible over transition from one layer to the other layer at dual layer recording. For this, reduced RAM is required to buffer the recording while calibration takes place. The slight decrease in quality due to reduced bit rate is less critical to the user than loosing completely some seconds due to OPC at transition.

## Claims

1. Method for recording on recording media (14) with different recording layers (16,18) having the steps of
- compressing data (AV) to be recorded
- buffering the compressed data (CD,CDH,CDS)
- recording the buffered data (RD) on a first recording layer (16,18)
**characterized by** the steps of
- checking the distance (D) to a switching operation from said first recording layer (16,18) to a second recording layer (18,16)
- when the distance (D) is below a predetermined value (DP) changing the ratio (R) of compressed data (CD) to be buffered per unit time to buffered data (RD) to be recorded per unit time to a low value
- when the distance (D) is zero or close to zero performing the switching operation from first layer (16,18) to second layer (18,16)
- when the switching operation is completed changing said ratio (R) back to its original value.

2. Method according to claim 1, wherein said ratio (R) is changed by changing the rate of compression (CR) of the data to be recorded (AV) to a low value before switching, and back to its original value after switching.

3. Method according to claim 1, **characterized by** the additional step of
- performing an initialization step (SO) before starting recording on a recording layer (16,18).

4. Method according to claim 2, wherein the initialization step is one of power calibration (S01), recording layer status detection (S02), and copy protection checking (S03).

5. Method according to one of the preceding claims, wherein the data (AV) to be recorded is one of audio and video, and the rate of compression (CR) is changed by changing the resolution.

6. Method according to one of the preceding claims, wherein the data (AV) to be recorded is one of audio and video, and changing the ratio (R) is reached by disregarding a high resolution part (CDH) of the compressed data (CD).

7. Method according to one of the preceding claims, wherein changing the ratio (R) is reached by temporarily increasing the writing data rate before switching until switching is completed.

8. Device being adapted to perform the method of one of the preceding claims.
